# EUROPÄISCHE PATENTSCHRIFT

(11) **EP 3 490 782 B1**
(45) Veröffentlichungstag und Bekanntmachung des Hinweises auf die Patenterteilung: **22.03.2023**
(21) Anmeldenummer: 17746469.0
(22) Anmeldetag: 31.07.2017
(51) Int. Cl.: B29C 64/106, B29C 64/336, B33Y 10/00, B33Y 70/00

(54) **VERFAHREN ZUM HERSTELLEN EINES DREIDIMENSIONALEN, VIELSCHICHTIGEN FASERVERBUNDTEILS**
METHOD FOR PRODUCING A THREE-DIMENSIONAL, MULTI-LAYER FIBRE COMPOSITE PART
PROCÉDÉ POUR LA FABRICATION D'UNE PIÈCE COMPOSITE À FIBRES MULTICOUCHE, TRIDIMENSIONNELLE

(30) Priorität: 01.08.2016 DE 102016214187
(43) Veröffentlichungstag der Anmeldung: 05.06.2019
(73) Patentinhaber: Fraunhofer-Gesellschaft zur Förderung der angewandten Forschung e.V., 80686 München (DE)
(72) Erfinder: DÖRSCH, Christian, 28215 Bremen (DE); ROSEMANN, Heiko, 27570 Bremerhaven (DE)
(74) Vertreter: Pfenning, Meinig & Partner mbB
(86) Internationale Anmeldenummer: PCT/EP2017/069298
(87) Internationale Veröffentlichungsnummer: WO 2018/024667

(56) Entgegenhaltungen:
- WO-A1-2014/193505
- WO-A1-2016/019434
- WO-A2-2014/153535

## Beschreibung

Die Erfindung betrifft ein Bauteil und ein Verfahren zum Herstellen eines dreidimensionalen, vielschichtigen Faserverbundbauteils gemäß dem Oberbegriff des Anspruchs 15 bzw. 1.

Nach dem Stand der Technik ist es bekannt, Produkte mittels additiver Fertigung herzustellen. Besonders im Prototypenbau werden Kunststoffteile mit kleinen Stückzahlen benötigt, die durch Fertigungsverfahren wie "Rapid Prototyping" hergestellt werden.

Aus der dem Oberbegriff des Anspruchs 1 zugrunde liegenden EP 2 739 460 B1 ist ein Verfahren bekannt, das mit dem generativen Auftragen eines thermoplastischen Werkstoffs gleichzeitig eine Endlosfaser zuführt und in dem Thermoplasten einbettet.

Die WO 2014/193505 A1 zeigt eine Maschine zum Herstellen eines faserverstärkten Bauteils durch Additive Fertigung. Die Maschine kann eine Arbeitsfläche aufweisen, eine Matrixzuführung zum Aufbringen von Matrixschichten auf die Arbeitsfläche und eine Faserzuführung, eingerichtet zum Aufbringen einer Faserschicht auf mindestens eine der Matrixschichten. Das Aufbringen der Matrix- und der Faserschichten kann durch einen Computer gesteuert werden. Die Druckschrift WO 2016/019434 A1 betrifft gemäß den Oberbegriffen der Ansprüche 1 und 15 ein Verfahren zum Herstellen eines Objekts unter Verwendung eines additiven Herstellungsprozesses. Das Verfahren verwendet eine computergesteuerte Vorrichtung mit einem Herstellungskopf zum selektiven Herstellen von Material und einen Aufbaubereich zum Aufnehmen des hergestellten Materials sowie ein durch dieses Verfahren hergestelltes Bauteil. Weiterer Stand der Technik verwandter Art ist beispielsweise in der Druckschrift WO 2014/153535 A2 beschrieben.

Beim additiven Fertigen werden einzelne Schichten Matrixwerkstoff auf einen Objektträger aufgetragen und oftmals findet nach jedem Schichtauftrag ein Aushärteprozess durch beispielsweise Erwärmen statt, um die Schicht zu verfestigen. Auf diese Schicht kann nun eine weitere Schicht aufgetragen werden, die wiederum ausgehärtet wird, sodass bei Wiederholung dieser Schritte ein Bauteil Schicht für Schicht aufgebaut wird.

Die Herstellung von Faserbundbauteilen wird entweder mit mindestens einer einseitigen Formhälfte oder mit einem Kern durchgeführt, auf die/den das Material schichtweise manuell oder maschinell abgelegt wird. Eine Herstellung von faserverstärkten Faserverbundbauteilen mit annähernd signifikanten, mechanischen Eigenschaften wie beispielsweise statische und/oder dynamische Festigkeiten oder Elastizitäten gibt es daher nicht. Aus diesen Gründen wird die additive Fertigung derzeit für die Herstellung von industriellen Anwendungsgütern lediglich für metallische Produkte oder in Bereichen, in denen keine hohen Anforderungen an die Materialeigenschaften in Bezug auf Festigkeit und Stabilität gestellt werden, genutzt.

Aufgabe der Erfindung ist ein Verfahren zum Herstellen eines festen und elastischen und damit mechanisch belastbaren Faserverbundbauteils, das die industriellen Anforderung an die Materialeigenschaften in Bezug auf Festigkeit, Stabilität und Komplexität erfüllt, sowie industrielle Ansprüche an die Wirtschaftlichkeit und eine geringe Fertigungsdauer berücksichtigt.

Gelöst wird die Aufgabe durch ein Verfahren mit den Merkmalen des Anspruchs 1. Vorteilhafte Weiterbildungen ergeben sich mit den Merkmalen der abhängigen Ansprüche und der Ausführungsbeispiele.

Das vorgeschlagene Verfahren eignet sich zum Herstellen eines dreidimensionalen vielschichtigen Faserverbundbauteils. Bei dem Verfahren wird ein aushärtbarer Matrixwerkstoff auf einen Objektträger in übereinander angeordneten Matrixschichten schichtweise aufgetragen. Der Objektträger kann beispielsweise eine Platte sein, die nicht Teil des Bauteils ist und auf der Schicht für Schicht ein Faserverbundbauteil aufgebaut wird. In einer weiteren Ausführung kann der Objektträger ein Bauteilkern sein, der Teil des Faserverbundbauteils ist und auf den die Matrixschichten aufgetragen werden kann. Eine Matrixschicht zeichnet sich somit dadurch aus, dass diese einer Kontur des Objektträgers folgend schichtweise aufgetragen wird. Nach jedem Schichtauftrag kann ein Aushärtevorgang, beispielsweise durch Erwärmung, durchgeführt werden, der die Matrixschicht aushärtet, sodass der Matrixwerkstoff in ihrer aufgetragenen Schichtform verbleibt. So kann auf die ausgehärtete Schicht eine weitere Schicht aufgetragen werden. Vorzugsweise wird zunächst eine Schicht vollständig aufgetragen und ausgehärtet bevor mit einer neuen Schicht begonnen wird. Der Matrixwerkstoff wird durch mindestens eine relativ zum Objektträger bewegbare Auftragseinheit aufgetragen. Die Auftragseinheit kann dabei eine Mehrachsgeometrie mit mindestens 3, vorzugsweise 6 Achsen umfassen.

In einem weiteren Schritt wird zumindest bereichsweise mindestens ein Faserelement auf mindestens eine der Matrixschichten durch mindestens einen relativ zum Objektträger bewegbaren Legekopf strangweise aufgetragen. Ein Faserelement kann beispielsweise eine sogenannte Endlosfaser sein, d.h. ein Faserstrang, der beispielsweise auf einer Spule aufgewickelt ist und eine Länge von mehreren Metern aufweist. Diese "Endlosfaser" kann vom Legekopf in wählbarer Länge auf eine Matrixschicht aufgebracht werden und wird in gewählter Länge durchtrennt. Ist die Endlosfaser verbraucht, kann weitere Endlosfaser auf die Spule aufgewickelt werden, sodass die Länge des aufgewickelten Faserelementes "endlos" scheint. Der Legekopf kann eine Mehrachsgeometrie umfassen, die mindestens 3, vorzugsweise 6 Achsen umfasst. Die Mehrachsgeometrie kann vorzugsweise dieselbe Mehrachsgeometrie sein, auf der ebenfalls die Auftragseinheit angeordnet ist.

Der Matrixwerkstoff ist ein Duroplast. Duroplasten sind harte und spröde Werkstoffe, die eine hohe Festigkeit und Temperaturbeständigkeit aufweisen. Zusätzlich werden in den duroplastischen Matrixwerkstoff Kurzfasern eingebettet, um die Elastizität und die Festigkeit des Faserverbundteils zu erhöhen.

Die Kurzfasern können vorzugsweise Glas- oder Kohlefasern mit höheren Elastizitätsmodulen sein, als der Elastizitätsmodul des Matrixwerkstoffes. Die Einbettung von Kurzfasern in den duroplastischen Matrixwerkstoff hat zum Ziel die jeweiligen positiven mechanischen Eigenschaften des Matrixwerkstoffes und der Kurzfasern zu nutzen, sodass der Verbund von Matrixwerkstoff und Kurzfasern eine höhere Elastizität und Festigkeit als die des Matrixwerkstoffes und eine höhere Festigkeit als die der Kurzfasern aufweist. Die Kurzfasern weisen vorzugsweise eine geringere Länge als das aufgetragene Faserelement auf. Hierdurch kann eine verbesserte Vermengung der Kurzfasern mit dem Matrixwerkstoff erreicht werden. Der Elastizitätsmodul des Matrixwerkstoffs mit eingebetteter Kurzfaser ist abhängig vom Matrix- und Kurzfaserwerkstoff sowie vom Anteil der Kurzfasern und liegt typischerweise zwischen 2 und 14 GPa. Hochbelastete Bauteile können bereichsweise jedoch höheren Belastungen ausgesetzt sein. Um diese Problematik zu lösen, wird zusätzlich bereichsweise das Faserelement aufgebracht. Das Faserelement kann vorzugsweise so auf das Bauteil aufgebracht werden, dass es entlang seiner Längsachse auf Zug belastet wird. Der Zug-Elastizitätsmodul des Faserelementes entlang seiner Längsachse beträgt vorzugsweise mindestens 70 GPa. Dies ist im Vergleich zum Zug-E-Modul von typischen Thermoplasten (1 bis 3 GPa) und Duroplasten (ca. 1 GPa) deutlich höher und kann somit die Elastizität des Faserverbundbauteils begünstigen.

Die Kombination von duroplastischem Matrixwerkstoff mit eingebetteten Kurzfasern und zusätzlich zumindest einem bereichsweise aufgetragenen Faserelement kann die Verwendung von Faserverbundbauteilen als mittel- bis hochfeste Funktionsbauteile aufgrund verbesserter Struktureigenschaften des Gesamtaufbaus ermöglichen.

Somit löst die gewählte Materialkombination das Problem, dass mechanisch mittel- bis hochbelastete Faserverbundbauteile, die eine Festigkeit von mindestens 10 GPa und Elastizitätsmodule zwischen 12 und 15 GPa aufweisen, nach dem heutigen Stand der Technik schwer oder gar nicht über additive Fertigungsverfahren hergestellt werden können. Dies liegt darin begründet, dass gängigerweise verwendete Kunststoffe entweder eine hohe Festigkeit und eine geringe Elastizität oder eine hohe Elastizität und eine geringe Festigkeit aufweisen. Dies hat zur Folge, dass additive Fertigungsverfahren nach dem derzeitigen Stand der Technik thermoplastische Matrixwerkstoffe verwenden, die eine hohe Elastizität bei geringer Festigkeit aufweisen, im Gegensatz zu spröden Kunststoffen jedoch einfacher zu verarbeiten sind und es einfacher scheint, die Festigkeit durch zusätzlichen Auftrag von Faserelementen zu erhöhen, als eine erhöhte Elastizität bei spröden Bauteilen zu erreichen. Im Gegensatz zu Duroplasten, welche einmal über der Vernetzungstemperatur (aber unter der Zersetzungstemperatur) erhitzt wurden, ändern Thermoplasten unter Erwärmung genau wie spröde Kunststoffe ihre Form und verflüssigen sich. Bei Thermoplasten ist dieser Vorgang im Wesentlichen reversibel. Dies gilt sowohl für eine längere Einwirkung einer niederen Temperatur als auch für eine kurzzeitige, starke Erwärmung.

Komplexe Bauteilformen, insbesondere hohle Bauteile, können ohne Bauteilkerne, die in konventionellen Verfahren kostenintensiv mit Formen hergestellt werden, mittels additiver Verfahren Schicht für Schicht aufgebaut werden. Auch im Vergleich zur Verwendung von Gelegen entsteht mit dem erfindungsgemäßen Verfahren weniger Verschnitt, sodass Material eingespart wird. Die gezielte, materialsparende Bauteilverstärkung wirkt sich zudem vorteilhaft auf eine Gewichtsreduktion des Faserverbundbauteils aus.

In einer möglichen Ausführung kann der Matrixwerkstoff thixotrop sein. Hierbei kann bei dem Verfahren ein zusätzlicher Schritt durchgeführt werden. Beispielsweise durch Rühren, kann die Viskosität des Matrixwerkstoffs vor dem Auftragen verringert werden, d.h. der Matrixwerkstoff wird dünnflüssiger. So kann das Auftragen erleichtert werden. Wird der Matrixwerkstoff nach dem Auftragen nicht weiter scherend beansprucht, verfestigt er sich wieder bis hin zu seiner Ausgangsviskosität, also dem Zustand, den er vor dem Einwirken von Scherkräften, bspw. Rühren, hatte. Bereits vor dem Verfahrensschritt des Aushärtens kann der Matrixwerkstoff so zusätzlich oder alternativ zum späteren Aushärten zur Formgebung des Faserverbundbauteils beitragen. Die Differenz zwischen Ausgangsviskosität und Minimalviskosität liegt typischerweise in einem Bereich zwischen 50 mPA s und 10 000 mPA s.

In manchen möglichen Ausführungsformen kann der Matrixwerkstoff ein duromerer Schaum sein. In einer weiteren Ausführung gemäß der Erfindung kann, je nach Aufbau der angestrebten Struktur des Faserverbundteils, der Matrixwerkstoff abwechselnd schichtweise eine faserhaltige Matrix oder ein duromerer Schaum sein. Vorteilhaft bei dieser Ausprägung ist, dass Bauteile und/oder Bauteilkerne gefertigt werden können, die eine geringe Dichte und hohe Festigkeit aufweisen. Besonders vorzugsweise können Polyurethan-Schäume als Matrixwerkstoff dienen. Es können aber auch andere schaumfähige Duroplasten wie beispielsweise Epoxy als Matrixwerkstoff verwendet werden. Die Dichte kann beispielsweise mindestens 50 kg/m³, vorzugsweise mindestens 75 kg/m³, insbesondere vorzugsweise 80 kg/m³ betragen. Ferner kann die Dichte beispielsweise maximal 800 kg/m³, vorzugsweise maximal 700 kg/m³, besonders bevorzugt maximal 600 kg/m³, betragen. Eine Druck-Festigkeit kann beispielsweise minimal 50 N/mm², vorzugsweise minimal 70 N/mm², besonders vorzugsweise minimal 80 N/mm², betragen. Die Druck-Festigkeit kann beispielsweise maximal 600 N/mm², vorzugsweise maximal 700 N/mm² oder besonders bevorzugt maximal 800 N/mm², betragen. Die Druckfestigkeit kann beispielsweise durch mindestens eine in einer der folgenden Normen beschriebene Prüfung ermittelt werden: ISO 844, DIN EN ISO 3386, DIN EN ISO 604, DIN EN 2850, DIN V 65380, DIN 65375 oder vergleichbare Norm. In einer weiteren bevorzugten Ausführung können die Matrixschichten eine Dicke von mindestens 0,05 mm, vorzugsweise mindestens 1 mm und/oder maximal 300 mm, vorzugsweise maximal100 mm, besonders vorzugsweise maximal 40 mm, aufweisen.

In einer weiteren möglichen Ausführung kann der Objektträger Teil des Faserverbundbauteils sein. In dieser Ausführung können beispielsweise vorgefertigte Bauteile und/oder Bauteilkerne als Objektträger dienen. Durch das Auftragen von Matrixwerkstoff auf das vorgefertigte Bauteil kann eine direkte Verbindung des Matrixwerkstoffs mit dem vorgefertigten Bauteil erreicht werden, so dass Verbindungselemente, wie beispielsweise Schweißnähte, entfallen.

Die Auftragseinheit kann in einer weiteren Ausführungsform einen Extrudierkopf aufweisen, so dass der Matrixwerkstoff mittels Extrusion aufgetragen werden kann. Beim Extrudieren können komplexe Formen strangweise aufgetragen werden. Vorteilhaft ist weiterhin, dass auch spröde Matrixwerkstoffe, die fest oder dickflüssig sind, extrudiert werden können, da diese unter Druck durch eine Düse oder ein sogenanntes Mundstück gepresst werden. Alternativ kann der Matrixwerkstoff auch tröpfchenweise aufgebracht werden. Vorteilhaft ist, dass beim tröpfchenweise Aufbringen keine hohen Drücke nötig sind, jedoch können feste und sehr dickflüssige Matrixwerkstoffe nur schwer tröpfchenweise aufgebracht werden.

In einer weiteren möglichen Ausführungsform können die Auftragseinheit und/oder der Legekopf unabhängig voneinander bewegbar sein. Dies hat den Vorteil, dass das Faserelement unabhängig von einem Verfahrweg der Auftragseinheit auf das herzustellende Faserverbundbauteil aufgebracht werden kann. Vorzugsweise sind die Auftragseinheit und/oder der Legekopf auf einer Mehrachsgeometrie angebracht, wobei die Mehrachsgeometrie vorzugsweise 3, besonders vorzugsweise 6 Achsen aufweist.

In einer weiteren Ausführungsform kann das Faserelement vor dem Auftragen auf den Matrixwerkstoff mit einer Flüssigkeit, beispielsweise einem Epoxidharz-Klebstoff, vorimprägniert werden. Bevorzugt kann die Flüssigkeit ein Klebstoff sein, so dass das Faserelement auf den Matrixwerkstoff geklebt werden kann. Zusätzlich oder alternativ kann das Faserelement in den Matrixwerkstoff eingebettet werden, bevor dieser vollständig ausgehärtet ist, sodass das Faserelement teilweise oder vollständig von Matrixwerkstoff umschlossen ist. So kann das Bauteil auch in Bereichen, in denen Bauteilbelastungen im Inneren des Bauteils auftreten, verstärkt werden. Bevorzugt kann das aufgetragene Faserelement eine Länge von mindestens 0,5 mm, vorzugsweise mindestens 1 mm, insbesondere vorzugsweise mindestens 10 mm, besitzen und zumindest eine Glas- und oder Kohlefaser enthalten. Glas- und Kohlefasern besitzen typischerweise hohe Zug-Elastizitätsmodule größer als 70 GPa, sodass sie hohen Zugbelastungen standhalten können.

In einer besonders bevorzugten Form können die Kurzfasern, die in den Matrixwerkstoff eingebettet werden, eine Länge von maximal 100 mm aufweisen Die Länge der eingebetteten Kurzfasern kann während des Auftragens variiert werden.

In einer weiteren Ausführung können die Kurzfasern dem Matrixwerkstoff in der Auftragseinheit beigemischt werden. Besonders vorteilhaft ist beispielsweise ein Extrudiermischkopf, in dem die Verfahrensschritte Kurzfasern einbetten und Matrixwerkstoff auftragen gleichzeitig durchgeführt werden können. Somit kann beispielsweise eine im Wesentlichen homogene Faserverteilung erreicht werden. Eine homogene Faserverteilung ist vorteilhaft, um eine im Wesentlichen homogene Stabilität und Bauteilqualität zu erreichen.

Kurzfasern können in einer oder mehreren Schichten Matrixwerkstoff eingebettet sein. In Bereichen, in denen Kurzfasern in den Matrixwerkstoff eingebettet werden, wird die Bauteilelastizität sowie die Zugfestigkeit wie oben erläutert erhöht. Vorteilhaft bei dieser Ausführungsform ist, dass Kurzfasern in Bereichen eingebettet werden können, in denen Bauteilbelastungen auftreten. So kann das herzustellende Bauteil hinsichtlich Gewicht und Materialverbrauch genau auf spätere Belastungen angepasst werden. Somit müssen keine Kurzfasern in Schichten eingebettet werden, in denen keine Verstärkung notwendig ist.

Für den gezielten Einsatz von Kurzfasern im Bauteil können Kurzfasern zwischen zwei Schichten Matrixwerkstoff aufgetragen werden. Die Kurzfasern können auch zwischen Faserelement und Matrixwerkstoff aufgetragen werden. In einer weiteren Ausführungsform können die Kurzfasern mit einer Flüssigkeit vorimprägniert werden, beispielsweise mit einem Klebstoff.

In einer weiteren vorteilhaften Ausführungsform können die Kurzfasern gerichtet in den Matrixwerkstoff eingebettet werden, d.h. eine Längsache der Kurzfasern weist eine vor dem Auftrag festgelegte Richtung auf, vorzugsweise entspricht diese Richtung der Richtung der Zugbelastungen des Faserverbundbauteils. Mittels eines Kurzfaserlegekopfes oder einer anderen Auftragseinheit können die Kurzfasern mit ihrer Längsachse entlang dem Verfahrweg der Auftragseinheit des Matrixwerkstoffes in den Matrixwerkstoff eingebettet werden. Die Kurzfasern weisen entlang ihrer Längsachse den höchsten Zug-Elastizitätsmodul auf. Diese Ausführungsform hat den Vorteil, dass die Kurzfasern in Zugbelastungsrichtung ausgerichtet werden können und das Bauteil somit höheren Zugbelastungen standhält, als bei ungeordneter Einbettung der Kurzfasern.

Für eine im Wesentlichen homogene Faserverteilung kann ein Volumen der im Matrixwerkstoff enthaltenen Kurzfasern gegenüber einem Gesamtmatrixvolumen mindestens 10 Vol.-%, vorzugsweise mindestens 30 Vol.-%, insbesondere vorzugsweise mindestens 35 Vol.-% und/oder maximal 80 Vol.-%, vorzugsweise maximal 70 Vol.-%, insbesondere vorzugsweise maximal 60 Vol.-%,betragen, wobei das Gesamtmatrixvolumen eine Summe des Volumens der eingebetteten Kurzfasern und eines Volumens des Matrixwerkstoffes ist. Ein hoher Anteil an Kurzfasern im Matrixwerkstoff hat den Vorteil, dass das Matrixwerkstoff-Kurzfasergemisch eine erhöhte Elastizität aufweisen und damit höheren Zugbelastungen standhalten kann. Es kann auch vorgesehen sein, dass der Volumenanteil der Kurzfasern am Gesamtmatrixvolumen während dem Auftrag von Matrixwerkstoff schichtweise variiert wird, sodass das Faserverbundbauteil vorzugsweise Bereiche mit unterschiedlichen Kurzfaservolumenanteilen aufweist. Diese Ausführung hat den Vorteil, dass das herzustellende Faserverbundbauteil hinsichtlich Gewicht und Materialverbrauch genau auf spätere Belastungen angepasst werden kann.

Der Verfahrensschritt II kann vor dem Verfahrensschritt III ausgeführt werden und/oder der Verfahrensschritt III vor Verfahrensschritt II ausgeführt werden. In Abhängigkeit der Anforderung an das Faserverbundbauteil kann das Faserelement in den Matrixwerkstoff eingebettet werden oder nach dem Aushärten gezielt auf Matrixschichten aufgebracht werden. Dies hat den Vorteil, dass das Faserelement auch in innenliegende Schichten des Faserverbundbauteils eingebettet werden kann. So kann das Faserelement auch Zugbelastungen aufnehmen, die im Inneren des Faserverbundteils auftreten.

Gegenstand der Anmeldung ist auch ein Faserverbundbauteil, welches den in dieser Anmeldung geschilderten Aufbau hat und vorzugsweise mit dem anmeldungsgemäßen Verfahren hergestellt worden ist. Weiterbildungen ergeben sich auch aus der Beschreibung des Ausführungsbeispiels.

Vorteilhafte Ausgestaltungen der Erfindung werden nachfolgend anhand der Figuren erläutert.

Es zeigen:
- Fig. 1: ein Flussdiagramm mit Verfahrensschritten eines Verfahrens zum Herstellen eines dreidimensionalen, vielschichtigen Faserverbundbauteils,
- Fig. 2: eine perspektivische Darstellung einer Auftragseinheit während eines Auftragens von Matrixwerkstoff,
- Fig. 3: eine schematische Darstellung einer Auftragseinheit während eines Auftragens von Matrixwerkstoff,
- Fig. 4: einen Schichtaufbau des Faserverbundteils in einem Ausschnitt eines Bauteilquerschnitts,
- Fig. 5: einen Schichtaufbau des Faserverbundbauteils mit imprägnierten Faserelementen in einem Ausschnitt eines Bauteilquerschnitts,
- Fig. 6: einen Schichtaufbau des Faserverbundteils mit gerichteten Kurzfasern zwischen zwei Matrixschichten,
- Fign. 7a und 7b: verschiedene Draufsichten auf ein Faserverbundbauteil mit Faserelement,
- Fig. 8: eine schematische Darstellung einer Herstellung eines Rotorblatts,
- Fig. 9: einen Längsschnitt des Rotorblatts und
- Fig. 10: einen Querschnitt des Rotorblatts.

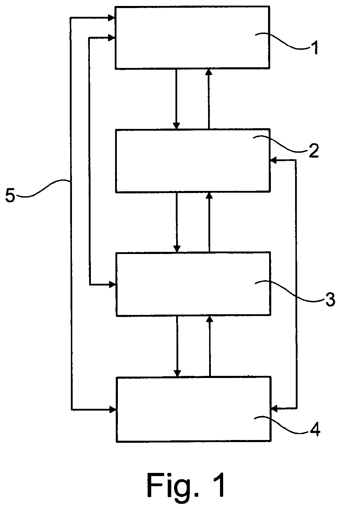

In Fig. 1 ist ein Flussdiagramm mit vier Schritten eines Verfahrens zum Herstellen eines dreidimensionalen vielschichtigen Faserverbundbauteils dargestellt. Die Verfahrensschritte lauten:
- Auftragen 1 von Matrixwerkstoff,
- Einbetten 2 von Kurzfasern,
- Auftragen 3 eines Faserelements und
- Aushärten 4.

Pfeile, von denen einer beispielhaft mit dem Bezugszeichen 5 versehen ist, zeigen verschiedene Ausführungsreihenfolgen. Das Verfahren kann mit Verfahrensschritt 1, 2 oder 3 begonnen werden. In einer beispielhaften Ausführung wird zunächst in einer Auftragseinheit, bspw. einem Extrudiermischkopf Matrixwerkstoff mit Kurzfasern vermengt. In dem Ausführungsbeispiel handelt es sich bei dem Matrixwerkstoff um duroplastischen Polyurethan, der Matrixwerkstoff kann jedoch auch ein anderer duroplastischer Matrixwerkstoff, beispielsweise Epoxidharz oder Formaldehydharz, sein. Die Kurzfasern sind im gezeigten Beispiel aus Glasfaser. Die Kurzfasern können auch anderen Werkstoffes sein, beispielsweise aus Kohlefaser oder Naturfaser, wie beispielsweise Holzfaser. Der Matrixwerkstoff ist im gezeigten Beispiel thixotrop. Die Kurzfasern und der Matrixwerkstoff sind in jeweils einem Materialspeicher gelagert. Der Matrixwerkstoff wird in dem Materialspeicher durchrührt, sodass die Viskosität des Matrixwerkstoffes aufgrund seiner Thixotropie verringert wird. In dem Extrudiermischkopf werden dem Matrixwerkstoff die Kurzfasern vor einem Auftragen, vor dem Ausfließen aus einer Auftragsdüse beigemischt. Das Matrix-Kurzfaser-Gemisch wird in einer ersten Schicht durch den Extrudierkopf, beispielsweise durch die Auftragsdüse, auf einen Objektträger aufgetragen, d.h. der Extrudiermischkopf fährt eine Kontur des Objektträgers ab und extrudiert einen Matrix-Kurzfaser-Gemisch-Strang auf den Objektträger. Der Matrix-Kurzfaser-Gemisch-Strang weist bei einem Auftragen vorzugsweise mindestens eine Länge auf, welche der doppelten Breite entspricht. Das Matrix-Faser-Gemisch wird nach dem Auftragen einer vollständigen Schicht beispielsweise durch Erwärmung ausgehärtet. Nach dem Aushärten wird ein weiterer Strang des Matrix-Faser-Gemisches auf den ersten Strang aufgetragen. Anschließend wird ein Faserelement mittels eines Legekopfes auf die zweite Matrixschicht aufgelegt, sodass das Faserelement, beispielsweise ein Glasfasertape, zumindest teilweise von noch nicht vollständig ausgehärtetem Matrix-Faser-Gemisch umschlossen wird. Es folgt ein Aushärtevorgang des Matrixwerkstoffes, beispielsweise durch Erhitzen. Die Verfahrensschritte können in beliebiger Reihenfolge kombiniert und wiederholt werden. Das Matrix-Faser-Gemisch kann strangweise, aber auch tröpfchenweise aufgetragen werden. Der Objektträger kann beispielsweise eine Platte sein, die das zu fertigende Faserverbundteil während des Herstellprozesses stützt, jedoch nicht Teil des Bauteils ist. Der Objektträger kann auch Teil des Faserverbundbauteils sein, beispielsweise in Form eines vorgefertigten Bauteilkerns, beispielsweise eines additiv vorgefertigten Bauteilkerns aus duromerem Schaum.

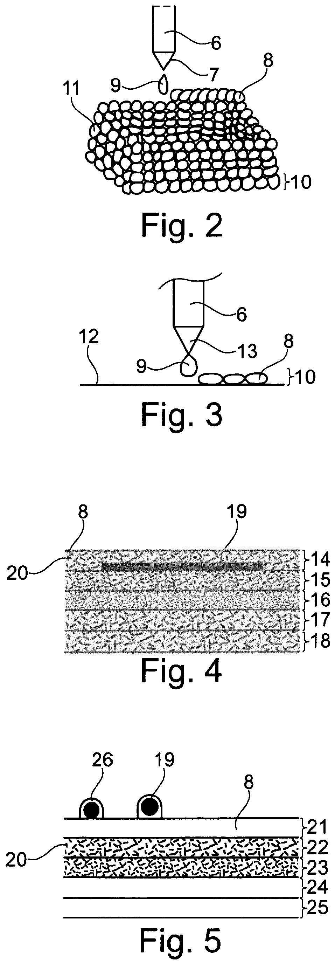

Fig. 2 illustriert den Verfahrensschritt Auftragen 1 von Matrixwerkstoff 8. Ein Die Auftragseinheit 6 besitzt eine Öffnung 7, durch die Matrixwerkstoff 8 tröpfchenweise ausgegeben wird. Nach Verlassen der Öffnung 7 ist der Matrixwerkstoff noch in einem zähflüssigen Zustand. Tropfen 9 werden nebeneinander aufgebracht, sodass sich diese verbinden und Matrixschichten 10 entstehen. Nach dem Auftrag einer Matrixschicht 10 härtet der Matrixwerkstoff 8, beispielsweise durch Erhitzen, aus. Die Matrixschichten 10 bilden einen Teil eines Bauteils 11. Das Bauteil 11 ist innen hohl. Alternativ kann der Matrixwerkstoff 8 strangweise aufgetragen werden. Der Matrixwerkstoff 8 kann beispielsweise ein thixotroper Werkstoff, beispielsweise duroplastischer Polyurethan sein.

Fig. 3 zeigt eine Auftragseinheit beim Auftragen einer Schicht. Wiederkehrende Merkmale sind in dieser und den folgenden Abbildungen mit den gleichen Bezugszeichen versehen. Ein Teil einer Auftragseinheit 6 hat eine Öffnung 7, durch die Matrixwerkstoff 8 tröpfchenweise ausgegeben wird. Der Matrixwerkstoff 8 wird auf einen Objektträger 12 aufgetragen. In dem gezeigten Beispiel ist der Objektträger 12 nicht Teil des Bauteils 11. In anderen Ausführungen kann der Objektträger 12 Teil des Bauteils 11 sein. Tropfen 9 werden nebeneinander mit einem Abstand von beispielsweise 1 mm aufgebracht und verbinden sich anschließend auf dem Objektträger mit den angrenzend angeordneten Tropfen zu einer Matrixschicht 10 aufgrund ihres flüssigen Zustandes. Zusätzlich oder alternativ kann der Matrixwerkstoff 8 strangweise auf den Objektträger 12 aufgetragen werden. In dem gezeigten Beispiel ist die Auftragseinheit 6 als Düse 13 ausgebildet. Die Auftragseinheit 6 kann in weiteren Ausführungsformen als Extrudierkopf und/oder als Extrudiermischkopf ausgebildet sein. In dem Extrudiermischkopf werden dem Matrixwerkstoff vor dem Auftragen Kurzfasern beigemischt.

In Fig. 4 ist ein Ausschnitt eines Bauteilquerschnitts dargestellt. Der Bauteilquerschnitt zeigt fünf Matrixschichten 14 -18. In einer zuerst aufgetragenen Schicht 14 ist ein Faserelement 19 in den Matrixwerkstoff 8 eingebettet. In dem Beispiel ist das Faserelement 19 vollständig von Matrixwerkstoff 8 umschlossen. In einer anderen Ausführungsform kann das Faserelement 18 nur teilweise von Matrixwerkstoff 8 umschlossen sein. Das Faserelement 18 ist im gezeigten Beispiel 6 cm lang. In den fünf Schichten 14 bis 18 sind Kurzfasern - eine davon ist beispielhaft mit dem Bezugszeichen 20 versehen- in den Matrixwerkstoff 8 eingebettet. Die Kurzfasern 20 sind ungeordnet, d.h. in zufälliger Richtungsverteilung, in den Matrixschichten 14 bis 18 eingebettet. In einem anderen Ausführungsbeispiel können die Kurzfasern 20 auch gerichtet und/oder geordnet in den Matrixwerkstoff 8 eingebettet werden, beispielsweise in dem diese mit ihrer Längsachse entlang des Verfahrweges der Auftragseinheit liegen. Die im Matrixwerkstoff enthaltenen Kurzfasern haben einen Anteil von beispielsweise Vol.-30 %. an einem Gesamtmatrixvolumen, wobei das Gesamtmatrixvolumen die Summe von Matrixwerkstoffvolumen und Kurzfaservolumen ist. Diese Materialmischung, beispielsweise duroplastisches Polyesterharz mit Kurzglasfaser, bewirkt beispielsweise eine hohe Elastizität, beispielsweise ein Zug-Elastizitätsmodul von 14 GPa, bei gleichzeitig hoher Biegefestigkeit, beispielsweise 120 MPa, eines herzustellenden Faserverbundbauteils.

In Fig. 5 ist ein Ausschnitt eines Bauteilquerschnitts dargestellt. Der Bauteilquerschnitt zeigt fünf Matrixschichten 21 bis 25. Auf der ersten Schicht 21 sind zwei Faserelemente 19 aufgebracht. Die Faserelemente 19 sind von einer Flüssigkeit umschlossen, in diesem Ausführungsbeispiel von einem Klebstoff 26, beispielsweise einem Epoxidharz. In anderen Ausführungsbeispielen kann es sich bei der Flüssigkeit um eine andere Flüssigkeit handeln. In der zweiten 22 und in der dritten Schicht 23 sind Kurzfasern 20 in den Matrixwerkstoff 8 eingebettet. In der ersten Schicht 21 und der vierten 24 und fünften Schicht 25 sind keine Kurzfasern 20 oder Faserelemente 19 eingebettet.

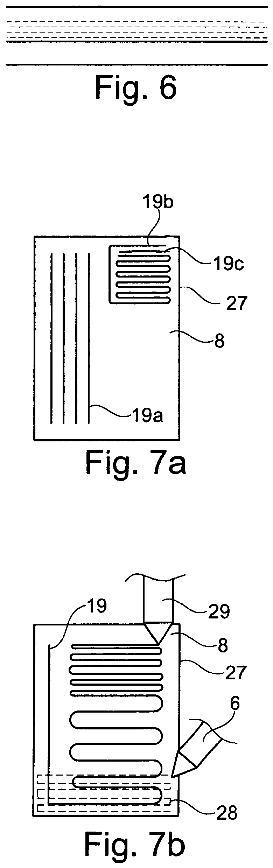

In Fig. 6 ist ein Ausschnitt eines Faserverbundbauteils dargestellt, der einen dreischichtigen Auftrag von Matrixwerkstoff 8 und Kurzfasern 20 illustriert. Gerichtete Kurzfasern 20 bilden eine mittlere Schicht. Bei dem Matrixwerkstoff 8 kann es sich beispielsweise um duromeren Polyurethan handeln. Die Kurzfasern können beispielsweise Glasfasern, insbesondere E-Glasfasern, sein. Eine Auftragseinheit 6, beispielsweise ein Extrudier-Legekopf trägt eine Schicht Matrixwerkstoff 8 auf einen Objektträger 12, beispielsweise eine Stahlplatte, auf. Im gezeigten Beispiel wird der Matrixwerkstoff in einem nächsten Verfahrensschritt, beispielsweise durch Erwärmen, ausgehärtet. Daraufhin legt die Auftragseinheit 6 in dem gezeigten Beispiel auf die erste Schicht Matrixwerkstoff 8 eine Vielzahl von Kurzfasern 20, beispielsweise Glasfasern, insbesondere E-Glasfasern. Die Kurzfasern 20 werden gerichtet, entlang ihrer Längsachsen parallel und entlang ihrer Längsachse in Richtung einer Zugbelastungsrichtung des Faserverbundbauteils zeigend, auf die erste Matrixschicht gelegt. Der Zug-Elastizitätsmodul der E-Glasfaser beträgt beispielsweise 70 GPa. In einem weiteren Verfahrensschritt wird durch die Auftragseinheit 6 eine zweite Schicht Matrixwerkstoff 8 auf die Kurzfasern 20 aufgetragen und ausgehärtet. Der Matrixwerkstoff 8 der zweiten Matrixschicht umschließt im gezeigten Beispiel die aufgetragenen Kurzfasern 20. Im gezeigten Beispiel wird die zweite Schicht Matrixwerkstoff 8 anschließend ausgehärtet und fixiert so die Kurzfasern beim Aushärten in ihrer gerichteten Position.

In einer anderen Ausführung kann auch ohne den Verfahrensschritt des Aushärtens auf die aufgetragene Matrixschicht Kurzfasern 20 aufgetragen werden, sodass diese bereits in der zuerst aufgetragenen Matrixschicht eingebettet werden. Der Matrixwerkstoff kann in einer anderen Ausführung fester sein, sodass die zweite aufgetragene Schicht Matrixwerkstoff 8 auf den Kurzfasern verbleibt und die Kurzfasern nicht vollständig umschließt.

In Fig. 7a ist eine Aufsicht auf ein Faserverbundbauteil 27 dargestellt. Auf das Faserverbundteil 27 sind Faserelemente 19a, 19b und 19c aufgetragen. Die Faserelemente 19a und 19c sind geradlinig aufgetragen. Das Faserelement 19b ist mäanderförmig aufgebracht. Vier Faserelemente sind parallel in geraden Strängen aufgetragen. Die Faserelemente, beispielsweise Glasfaser, Kohlefaser oder Naturfaser, haben Zug-Elastizitätsmodule zwischen 70 und 400 GPa. Dies bewirkt eine hohe Elastizität des Faserverbundbauteils 27 in den Bereichen, in denen Faserelemente in Zugbelastungsrichtung aufgetragen sind. Durch einen Freiformauftrag, d.h. durch eine beliebig wählbare Form der Auftragsgeometrie, können, wie im Beispiel gezeigt, Zugbelastungen in verschiedenen Richtungen des Faserverbundbauteils 27 aufgenommen werden. Die Faserelemente 19a, 19b und 19c sind in verschiedenen Bereichen des Faserverbundteils aufgebracht.

In Fig. 7b ist eine weitere Aufsicht auf ein Faserverbundbauteil 27 mit einem Faserelement 19 dargestellt. Das Faserelement 19 ist im vorliegenden Ausführungsbeispiel kurvenförmig auf den Matrixwerkstoff 8 aufgetragen. Das Faserelement 19 überlappt sich nicht. In anderen Ausführungsbeispielen kann das Faserelement 19 auch sich selbst überlappend angeordnet sein. Das Faserelement 19 enthält beispielsweise Kohlefaser und/oder Glasfaser, kann aber auch andere Materialien wie beispielsweise Naturfasern wie z.B. Sisal, Kenaf, Hanf oder ähnliche Langfasern enthalten. Das Faserelement 19 weist beispielsweise eine Länge von 16 cm auf. Zudem sind eine Auftragseinheit 6 und ihr Verfahrweg 28 dargestellt. Das Faserelement 19 wird durch einen Legekopf 29 aufgetragen. Ein Verfahrweg des Legekopfes 29 entspricht der Form des aufgetragenen Faserelements 19 und entspricht nicht zwangsläufig dem Verfahrweg 28 der Auftragseinheit 6 des Matrixwerkstoffs 8. Der Legekopf 29 und die Auftragseinheit 6 können gleichzeitig aktiv sein. Der Legekopf 29 und die Auftragseinheit 6 können parallel angeordnet sein. Der Legekopf 29 und die Auftragseinheit 6 können beispielsweise auf einer Mehrachsgeometrie angeordnet sein. Vorzugsweise enthält die Mehrachsgeometrie 3 Achsen, insbesondere vorzugsweise 6 Achsen. Der Legekopf 29 und die Auftragseinheit 6 können unabhängig voneinander auf der Mehrachsgeometrie verfahren.

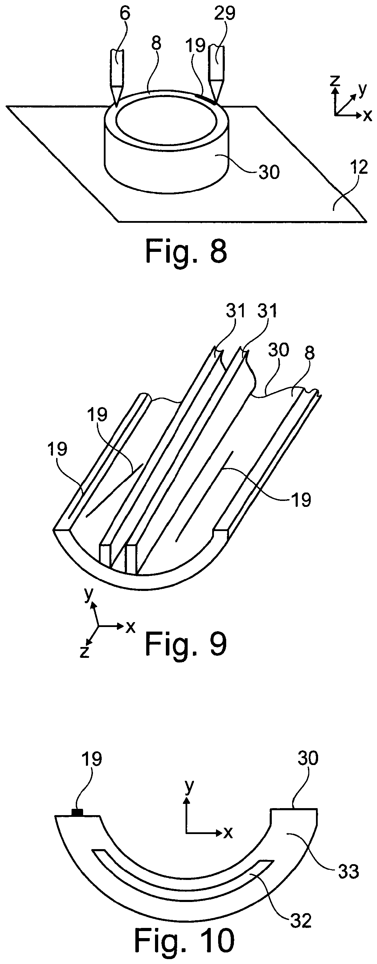

Fig. 8 zeigt in schematischer Darstellung eine Herstellung eines Rotorblatts 30 einer Windkraftanlage. Das Rotorblatt ist ein im Bereich der Rotornabe i Wesentlichen kreisringförmiges, hohles Bauteil. Eine Auftragseinheit 6 trägt schichtweise Matrixwerkstoff 8 auf einen Objektträger 12 auf. In diesem Ausführungsbeispiel fährt die Auftragseinheit 6 eine kreisförmige Bahn ab, wobei die abgefahrenen Kreise konzentrisch mit dem Kreisring des Rotorblatts sind, und trägt Matrixwerkstoff 8 schichtweise auf. Mit zunehmender Schichtanzahl kann die Bahn jedoch auch die Geometrie eines Rotorblattquerschnittes annehmen, d.h. elliptisch oder stromlinienförmig werden. Im gezeigten Beispiel trägt ein Legekopf 29 ein Faserelement 19 bereichsweise auf bereits aufgetragene Matrixschichten des Kreisrings auf. Das Faserelement 19 wird mit einer Krümmung aufgetragen, die einer Krümmung des Kreisrings des Rotorblattes entspricht. Im gezeigten Beispiel wird der Matrixwerkstoff 8 nach dem Auftrag einer Schicht durch die Auftragseinheit, und nachdem das Faserelement 19 eingebettet wurde, ausgehärtet. Das Faserelement ist von Matrixwerkstoff 8 umschlossen, kann in einem weiteren Ausführungsbeispiel aber auch nur teilweise von Matrixwerkstoff 8 umschlossen sein. Durch die Aushärtung des Matrixwerkstoffes 8 nach Einbettung des Faserelementes ist kein zusätzlicher Klebstoff zur Fixierung des Faserelementes 19 notwendig, da der Matrixwerkstoff 8 das Faserelement 19 beim Aushärten in der Matrixschicht fixiert. In diesem Ausführungsbeispiel ist der Objektträger 12 nicht Teil des Faserverbundbauteils. Der Matrixwerkstoff 8 kann mit Kurzfasern gemischt sein, die, beispielsweise vor dem Auftragen des Matrixwerkstoffes, in den Matrixwerkstoff eingebettet wurden. Die Kurzfasern können beispielsweise UMS-Kohlenstofffasern sein, die ein Zug-Elastizitätsmodul von 395 GPa aufweisen. Dies hat den Vorteil, dass eine Elastizität des Rotorblattes 30 in Bereichen der dem Matrixwerkstoff 8 zugemischten Kurzfasern 20 erhöht wird.

In Fig. 9 ist ein Längsschnitt eines Rotorblatts 30 einer Windkraftanlage dargestellt. Der Längsschnitt liegt in der xz-Ebene. Der Ausschnitt des Rotorblattes im Längsschnitt hat die Form eines extrudierten Halbkreisringes, der mit dem Kreisinneren nach oben (in y-Richtung) zeigt. Auf dem Rotorblatt 30 sind zwei trapezförmige Stabilisationsstege 31, beispielsweise aus duroplastischem Polyurethan, angebracht. Die Stabilisationsstege 31 liegen in ihrer Längsachse parallel zueinander und sind in ihrer Längsachse parallel zur Längsachse des Rotorblatts 30 angeordnet. Die Stabilisationsstege verstärken das Rotorblatt 30 und erhöhen eine Biege- und eine Torsionssteifigkeit. Für eine Erhöhung einer Zugfestigkeit sind im gezeigten Beispiel in verschiedenen Bereichen Faserelemente 19, beispielsweise aus E-Glasfaser, auf das Rotorblatt 30 aufgebracht. Im gezeigten Beispiel sind zwei Faserelemente 19 auf der inneren Mantelfläche des Rotorblattes auf jeweils einer Seite der Stabilisationsstege 31 aufgebracht. Ein weiteres Faserelement 19 ist beispielsweise auf der Schnittkante entlang der Längsache des Rotorblattes entgegengesetzt der z-Richtung in den Matrixwerkstoff 8 eingebettet.

In Fig. 10 ist ein Querschnitt des Rotorblatts 30 der Windkraftanlage dargestellt. Der Querschnitt verläuft durch die xy-Ebene. In diesem Ausführungsbeispiel hat das Bauteil beispielsweise einen duromeren Schaumkern 32, beispielsweise aus duromerem Polyurethan-Schaum. In einem anderen Beispiel kann ein Faserverbundbauteil, in diesem Beispiel ein Rotorblatt 30, einen Bauteilkern aus anderem Material besitzen. Im gezeigten Beispiel dient der duromere Schaumkern 32 als Objektträger, sodass Matrixwerkstoff additiv um den Schaumkern 32 aufgetragen wird. Eine Auftragseinheit umfasst beispielsweise eine 6-Achsgeometrie, auf der beispielsweise ein Extrudiermischkopf mit 6 Freiheitsgraden verfahren kann und ein Matrix-Kurzfaser-Gemisch 33, beispielsweise ein Epoxidharz-Glasfaser-Gemisch, schichtweise, der Kontur des duromeren Schaumkerns 32 folgend, auf den duromeren Schaumkern 32 aufträgt. Der Schaumkern 32 kann in einer anderen Ausführungsform auch additiv in dem gleichen Verfahren aufgetragen werden, wie das den Schaumkern 32 umschließende Matrix-Kurzfaser-Gemisch 33. Zudem ist ein Faserelement 19 auf das Matrix-Kurzfaser-Gemisch 33 aufgetragen. Das Faserelement 19, beispielsweise aus Kohlenstofffaser, insbesondere aus HT-Kohlenstofffaser, ist jeweils länglich und geradlinig ausgebildet. Der Zug-Elastizitätsmodul der HT-Faser beträgt etwa 230 GPa und verstärkt das Rotorblatt 30 hinsichtlich Zugbelastungen in Längsrichtung des aufgebrachten Faserelements 19. In einem anderen Ausführungsbeispiel können die Faserelemente 19 auch andere Formen aufweisen.

## Patentansprüche

1. Verfahren zum Herstellen eines dreidimensionalen, vielschichtigen Faserverbundbauteils (11), wobei das Verfahren die Schritte umfasst
I. Schichtweises Auftragen eines aushärtbaren Matrixwerkstoffes (8) auf einen Objektträger (12) in übereinander angeordneten Matrixschichten durch mindestens eine relativ zum Objektträger (12) bewegbare Auftragseinheit (6), wobei Matrixwerkstoff (8), der in einer Lage aufgetragen wurde, eine Matrixschicht bildet,
II. Zumindest bereichsweises, strangweises Auftragen mindestens eines Faserelementes (19) auf mindestens eine der Matrixschichten durch mindestens einen relativ zum Objektträger (12) bewegbaren Legekopf,
III. Aushärten des Matrixwerkstoffes (8),
wobei der Matrixwerkstoff (8) ein Duroplast ist und in den Duroplasten Kurzfasern (20) eingebettet werden, wobei die Kurzfasern (20) eine geringere Länge als das aufgetragene Faserelement (19) aufweisen,
**dadurch gekennzeichnet,**
**dass** abwechselnd schichtweise der faserhaltige Matrixwerkstoff und ein duromerer Schaum aufgetragen werden.

2. Verfahren nach Anspruch 1, **dadurch gekennzeichnet, dass** der Matrixwerkstoff thixotrop ist.

3. Verfahren nach einem der vorhergehenden Ansprüche, **dadurch gekennzeichnet, dass** der Matrixwerkstoff (8) ein duromerer Schaum ist.

4. Verfahren nach einem der vorhergehenden Ansprüche, **dadurch gekennzeichnet, dass** die Matrixschichten eine Dicke von minimal 0,05 mm und maximal 300 mm aufweisen.

5. Verfahren nach einem der vorhergehenden Ansprüche, **dadurch gekennzeichnet, dass** der Objektträger (12) Teil des Faserverbundbauteils (11) ist.

6. Verfahren nach einem der vorhergehenden Ansprüche, **dadurch gekennzeichnet, dass** die Auftragseinheit (6) einen Extrudierkopf aufweist, und/oder
**dadurch gekennzeichnet, dass** die Auftragseinheit (6) und/oder der Legekopf (29) unabhängig voneinander bewegbar sind.

7. Verfahren nach einem der vorhergehenden Ansprüche, **dadurch gekennzeichnet, dass** das Faserelement (19) mindestens eine Glas- und/oder Kohlefaser enthält und/oder
**dadurch gekennzeichnet, dass** das aufgetragene Faserelement (19) eine Länge von mindestens 0,5 mm besitzt.

8. Verfahren nach einem der vorhergehenden Ansprüche, **dadurch gekennzeichnet, dass** das Faserelement (19) vor dem Auftragen auf den Matrixwerkstoff (8) mit einer Flüssigkeit (26) vorimprägniert wird, und/oder
**dadurch gekennzeichnet, dass** das Faserelement (19) zumindest teilweise in den Matrixwerkstoff (8) eingebettet wird.

9. Verfahren nach einem der vorhergehenden Ansprüche, **dadurch gekennzeichnet, dass** die Kurzfasern (20), die in den Matrixwerkstoff eingebettet werden, eine Länge von minimal 0,5 mm und maximal 100 mm aufweisen.

10. Verfahren nach einem der vorhergehenden Ansprüche, **dadurch gekennzeichnet, dass** die Kurzfasern (20) dem Matrixwerkstoff (8) in der Auftragseinheit (6) beigemischt werden, und/oder
**dadurch gekennzeichnet, dass** Kurzfasern (20) in eine oder mehrere Schichten Matrixwerkstoff (8) eingebettet ist/sind.

11. Verfahren nach einem der vorhergehenden Ansprüche, **dadurch gekennzeichnet, dass** Kurzfasern (20) zwischen zwei Schichten Matrixwerkstoff (8) aufgetragen sind.

12. Verfahren nach einem der vorhergehenden Ansprüche, **dadurch gekennzeichnet, dass** die Kurzfasern (20), die in den Matrixwerkstoff (8) eingebettet werden, gerichtet in den Matrixwerkstoff (8) eingebettet werden und mit ihrer Längsachse entlang des Verfahrweges (28) der Auftragseinheit des Matrixwerkstoffes liegen.

13. Verfahren nach einem der vorhergehenden Ansprüche, **dadurch gekennzeichnet, dass** ein Volumen der im Matrixwerkstoff (8) enthaltenen Kurzfasern (20) gegenüber einem Gesamtmatrixvolumen mindestens 10 % beträgt, wobei das Gesamtmatrixvolumen eine Summe des Volumens der eingebetteten Kurzfasern (20) und eines Volumens des Matrixwerkstoffes (8) ist, und/oder
**dadurch gekennzeichnet, dass** in mindestens zwei Schichten ein Volumen der im Matrixwerkstoff (8) enthaltenen Kurzfasern (20) gegenüber einem Gesamtmatrixvolumen unterschiedlich ist, wobei das Gesamtmatrixvolumen eine Summe des Volumens der eingebetteten Kurzfasern (20) und eines Volumens des Matrixwerkstoffes (8) ist.

14. Verfahren nach einem der vorhergehenden Ansprüche, **dadurch gekennzeichnet, dass** der Schritt II vor Schritt III ausgeführt wird und/oder der Schritt III vor Schritt II ausgeführt wird.

15. Bauteil, das ein dreidimensionales, vielschichtiges Faserverbundbauteil (11) ist, wobei das Bauteil umfasst
I. Schichtweise aufgetragenen Matrixwerkstoff (8), der auf einen Objektträger (12) in übereinander angeordneten Matrixschichten durch mindestens eine relativ zum Objektträger (12) bewegbare Auftragseinheit (6) aufgetragen ist, wobei Matrixwerkstoff (8), der in einer Lage aufgetragen wurde, eine Matrixschicht bildet,
II. Mindestens ein Faserelement (19), das zumindest bereichsweise, strangweise aufgetragen ist auf mindestens eine der Matrixschichten durch mindestens einen relativ zum Objektträger (12) bewegbaren Legekopf,
III. Wobei der Matrixwerkstoff (8) ausgehärtet ist,
wobei der Matrixwerkstoff (8) ein Duroplast ist und in den Duroplasten Kurzfasern (20) eingebettet sind, wobei die Kurzfasern (20) eine geringere Länge als das aufgetragene Faserelement (19) aufweisen,
**dadurch gekennzeichnet,**
**dass** abwechselnd schichtweise der faserhaltige Matrixwerkstoff und ein duromerer Schaum aufgetragen ist.

## Claims

1. A method for producing a three-dimensional, multi-layered fiber composite component (11), the method comprising the following steps:
I. layered depositing of a curable matrix material (8) onto an object carrier (12) in matrix layers that are arranged on top of one another by at least one depositing unit (6), which is movable relative to the object carrier (12), wherein matrix material (8), which has been deposited in a layer, forms a matrix layer;
II. at least regional, strand-wise depositing of at least one fiber element (19) onto at least one of the matrix layers by at least one laying head that is movable relative to the object carrier (12);
III. curing of the matrix material (8),
the matrix material (8) being a thermosetting polymer and short fibers (20) being embedded into the thermosetting polymer, the short fibers (20) having a smaller length than the deposited fiber element (19),
**characterized in that**
the fiber-containing matrix material and a duromeric foam are deposited in layers in an alternating manner.

2. The method according to claim 1, **characterized in that** the matrix material is thixotropic.

3. The method according to any one of the preceding claims, **characterized in that** the matrix material (8) is a duromeric foam.

4. The method according to any one of the preceding claims, **characterized in that** the matrix layers have a thickness of at least 0.05 mm and at the most 300 mm.

5. The method according to any one of the preceding claims, **characterized in that** the object carrier (12) is part of the fiber composite component (11).

6. The method according to any one of the preceding claims, **characterized in that** the depositing unit (6) comprises an extruding head, and/or
**characterized in that** the depositing unit (6) and/or the laying head (29) are movable independently of one another.

7. The method according to any one of the preceding claims, **characterized in that** the fiber element (19) comprises at least one glass fiber and/or carbon fiber, and/or
**characterized in that** the deposited fiber element (19) has a length of at least 0.5 mm.

8. The method according to any one of the preceding claims, **characterized in that** the fiber element (19) is pre-impregnated with a liquid (26) before the deposition onto the matrix material (8), and/or
**characterized in that** the fiber element (19) is embedded at least partly into the matrix material (8).

9. The method according to any one of the preceding claims, **characterized in that** the short fibers (20) that are embedded into the matrix material have a length of at least 0.5 mm and at the most 100 mm.

10. The method according to any one of the preceding claims, **characterized in that** the short fibers (20) are admixed to the matrix material (8) in the depositing unit (6), and/or
**characterized in that** short fiber(s) (20) is/are embedded into one or more layers of matrix material (8).

11. The method according to any one of the preceding claims, **characterized in that** short fibers (20) are deposited between two layers of matrix material (8).

12. The method according to any one of the preceding claims, **characterized in that** the short fibers (20) that are embedded into the matrix material (8) are embedded into the matrix material (8) in a directed manner and lie with their longitudinal axis along the traversing path (28) of the depositing unit of the matrix material.

13. The method according to any one of the claims, **characterized in that** a volume of the short fibers (20) that are contained in the matrix material (8) is at least 10% compared to a total matrix volume, the total matrix volume being a sum of the volume of the embedded short fibers (20) and of a volume of the matrix material (8), and/or
**characterized in that** a volume of the short fibers (20) that are contained in the matrix material (8) is different in at least two layers compared to the total matrix volume, the total matrix volume being a sum of the volume of the embedded short fibers (20) and of a volume of the matrix material (8).

14. The method according to any one of the preceding claims, **characterized in that** step II is carried out before step III and/or step III before step II.

15. A component, which is a three-dimensional, multi-layered fiber composite component (11), the component comprising
I. matrix material (8) deposited in a layered manner, which is deposited onto an object carrier (12) in matrix layers that are arranged on top of one another by at least one depositing unit (6), which is movable relative to the object carrier (12), matrix material (8), which has been deposited in a layer, forming a matrix layer;
II. at least one fiber element (19), which is at least regionally, strand-wise deposited onto at least one of the matrix layers by at least one laying head that is movable relative to the object carrier (12);
III. the matrix material (8) being cured;
the matrix material (8) being a thermosetting polymer and short fibers (20) being embedded into the thermosetting polymer, the short fibers (20) having a smaller length than the deposited fiber element (19),
**characterized in that**
the fiber-containing matrix material and a duromeric foam are deposited in layers in an alternating manner.

## Revendications

1. Procédé de fabrication d'une pièce composite fibreuse multicouche tridimensionnelle (11), le procédé comprenant les étapes consistant à
I. appliquer un matériau de matrice durcissable (8) par couches sur un porte-objet (12) sous forme de couches de matrice superposées par l'intermédiaire d'au moins une unité d'application (6) mobile par rapport au porte-objet (12), dans lequel le matériau de matrice (8) qui est appliqué dans une couche forme une couche de matrice,
II. appliquer en faisceau au moins un élément fibreux (19) au moins dans des zones, sur au moins une des couches de matrice, à l'aide d'au moins une tête de pose mobile par rapport au porte-objet (12),
III. faire durcir le matériau de matrice (8),
dans lequel le matériau de matrice (8) est un plastique thermodurcissable et des fibres courtes (20) sont noyées dans le plastique thermodurcissable, dans lequel les fibres courtes (20) présentent une longueur plus courte que l'élément fibreux appliqué (19),
**caractérisé en ce que**
le matériau de matrice fibreux et une mousse thermodurcissable sont appliqués alternativement par couches.

2. Procédé selon la revendication 1, **caractérisé en ce que** le matériau de matrice est thixotrope.

3. Procédé selon l'une quelconque des revendications précédentes, **caractérisé en ce que** le matériau de matrice (8) est une mousse thermodurcissable.

4. Procédé selon l'une quelconque des revendications précédentes, **caractérisé en ce que** les couches de matrice présentent une épaisseur d'au moins 0,05 mm et d'au plus 300 mm.

5. Procédé selon l'une quelconque des revendications précédentes, **caractérisé en ce que** le porte-objet (12) fait partie de la pièce composite fibreuse (11).

6. Procédé selon l'une des revendications précédentes, **caractérisé en ce que** l'unité d'application (6) comporte une tête d'extrusion, et/ou
**caractérisé en ce que** l'unité d'application (6) et/ou la tête de pose (29) sont mobiles indépendamment l'une de l'autre.

7. Procédé selon l'une quelconque des revendications précédentes, **caractérisé en ce que** l'élément fibreux (19) contient au moins une fibre de verre et/ou de carbone et/ou
**caractérisé en ce que** l'élément fibreux appliqué (19) présente une longueur d'au moins 0,5 mm.

8. Procédé selon l'une quelconque des revendications précédentes, **caractérisé en ce que** l'élément fibreux (19) est pré-imprégné d'un liquide (26) avant l'application sur le matériau de matrice (8), et/ou
**caractérisé en ce que** l'élément fibreux (19) est au moins partiellement noyé dans le matériau de matrice (8).

9. Procédé selon l'une quelconque des revendications précédentes, **caractérisé en ce que** les fibres courtes (20) qui sont noyées dans le matériau de matrice présentent une longueur d'au moins 0,5 mm et d'au plus 100 mm.

10. Procédé selon l'une quelconque des revendications précédentes, **caractérisé en ce que** les fibres courtes (20) sont mélangées au matériau de matrice (8) dans l'unité d'application (6), et/ou
**caractérisé en ce que** des fibres courtes (20) sont noyées dans une ou plusieurs couches du matériau de matrice (8).

11. Procédé selon l'une quelconque des revendications précédentes, **caractérisé en ce que** des fibres courtes (20) sont appliquées entre deux couches de matériau de matrice (8).

12. Procédé selon l'une quelconque des revendications précédentes, **caractérisé en ce que** les fibres courtes (20) qui sont noyées dans le matériau de matrice (8) sont noyées dans le matériau de matrice (8) de manière orientée et sont situées avec leur axe longitudinal le long du trajet de déplacement (28) de l'unité d'application du matériau de matrice.

13. Procédé selon l'une quelconque des revendications précédentes, **caractérisé en ce qu'**un volume des fibres courtes (20) contenues dans le matériau de matrice (8) est d'au moins 10 % par rapport à un volume de matrice total, dans lequel le volume de matrice total est une somme du volume des fibres courtes noyées (20) et d'un volume du matériau de matrice (8), et/ou
**caractérisé en ce que** dans au moins deux couches, un volume des fibres courtes (20) contenues dans le matériau de matrice (8) diffère d'un volume de matrice total, dans lequel le volume de matrice total est une somme du volume des fibres courtes noyées (20) et d'un volume du matériau de matrice (8).

14. Procédé selon l'une quelconque des revendications précédentes, **caractérisé en ce que** l'étape Il est réalisée avant l'étape III et/ou l'étape III est réalisée avant l'étape II.

15. Pièce qui est une pièce composite fibreuse multicouche tridimensionnelle (11), la pièce comprenant
I. un matériau de matrice (8) appliqué par couches, qui est appliqué sur un porte-objet (12) dans des couches de matrice superposées par au moins une unité d'application (6) mobile par rapport au porte-objet (12), dans lequel le matériau de matrice (8) qui a été appliqué dans une couche forme une couche de matrice,
II. au moins un élément fibreux (19), qui est appliqué en faisceau sur au moins une des couches de matrice, au moins dans des zones par au moins une tête de pose qui peut être déplacée par rapport au porte-objet (12),
III. dans laquelle le matériau de matrice (8) est durci,
dans laquelle le matériau de matrice (8) est un plastique thermodurcissable et des fibres courtes (20) sont noyées dans le plastique thermodurcissable, dans laquelle les fibres courtes (20) présentent une longueur plus courte que l'élément fibreux appliqué (19),
**caractérisé en ce que**
le matériau de matrice fibreux et une mousse thermodurcissable sont appliqués alternativement par couches.
